# EUROPEAN PATENT APPLICATION

(11) **EP 3 616 835 A1**
(43) Date of publication of application: **04.03.2020**
(21) Application number: 19193715.0
(22) Date of filing: 27.08.2019
(51) Int. Cl.: B23Q 11/10

(54) **MACHINING DEVICE WITH A PLURALITY OF COOLING NOZZLES**

(30) Priority: 30.08.2018 JP 2018161405
(71) Applicant: DGSHAPE Corporation, Hamamatsu-shi, Shizuoka 431-2103 (JP)
(72) Inventor: OHARA, Hisashi, Hamamatsu-shi, Shizuoka 4312103 (JP); SAITO, Koji, Hamamatsu-shi, Shizuoka 4312103 (JP)
(74) Representative: Grünecker Patent- und Rechtsanwälte PartG mbB

(57) **Abstract**

To provide machining devices in which it is possible to cool workpieces and tip tools without failure or improve smoothness.

A machining device including: a drive shaft to which a tip tool can be attached, the tip tool being capable of machining a workpiece; and a plurality of nozzles shooting a coolant toward a plurality of sites on a shaft axis of the drive shaft.

## Description

### Technical field

The present invention relates to machining devices.

### Background art

Machining devices equipped with a motor that drives a drive shaft and machine workpieces by driving a tip tool attached to the drive shaft have been known (JP-A-2016-135519).

In the machining devices as described above, tip tools directly come into contact with workpieces for machining. Therefore, it is necessary to prevent galling or damages of tip tools at the machined sites at which the workpiece comes into contact with the tip tool. As a method of preventing galling and damages, it is contemplated to employ a structure that shoots the coolant for machining work toward a machined site to cool and lubricate the workpiece and the tip tool.

In the above-mentioned structure, when replacing a tip tool attached to the drive shaft with another of a different type, there have been problems that appropriate delivery of the coolant to the machined site can be failed in some cases and that it is difficult to cool workpieces and tip tools without failure or improve smoothness.

In consideration of the above-mentioned problem, an object of the present invention is to provide machining devices that is capable of cooling workpieces and tip tools without failure or improve smoothness.

In order to solve the aforementioned problem, the present invention provides a machining device including: a drive shaft to which a tip tool can be attached, the tip tool being capable of machining a workpiece; and a plurality of nozzles shooting a coolant toward a plurality of sites on a shaft axis of the drive shaft.

### Effect of the invention

According to the present invention, it is possible to provide machining devices in which it is possible to cool workpieces and tip tools without failure or improve smoothness.

### Brief description of the drawings

Fig. 1 is an external perspective view showing a machining device according to an embodiment;
Fig. 2 is a perspective view showing an internal structure of the machining device according to the embodiment;
Fig. 3 is a cross-sectional view of the machining device according to the embodiment;
Fig. 4A is a view showing an attachment unit to which a workpiece has been attached;
Fig. 4B is a view showing two kinds of milling bars, according to the embodiment;
Fig. 5A is a side view of a motor and a jacket according to the embodiment;
Fig. 5B is a cross-sectional view taken along the line b-b in Fig. 5A;
Fig. 6A is a perspective view of the motor and the jacket according to the embodiment in a state that a long milling is attached;
Fig. 6B is a perspective view of the motor and the jacket according to the embodiment in a state that a short milling bar is attached; and
Fig. 7 is a perspective view showing a motor and a jacket according to a modification.

### Detailed description of the invention

### <Embodiment>

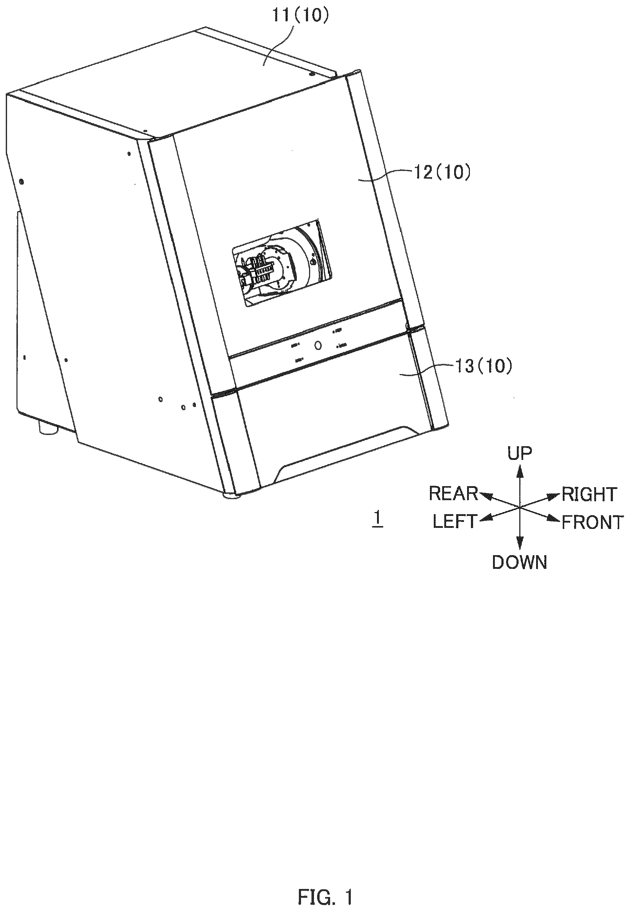

Referring to Figs. 1 to 6, a machining device 1 according to an embodiment of the present invention is described. As shown in Figs. 1 to 3, the machining device 1 according to this embodiment includes a housing 10, a machining unit 20, a movement mechanism 30, a holding unit 40, a tank 50, a feed unit 60, and a filter 70. The machining device 1 is for three-dimensionally cutting a workpiece C. The tank 50 can be attached to and detached from the housing 10. The filter 70 can be attached to and removed from the tank 50.

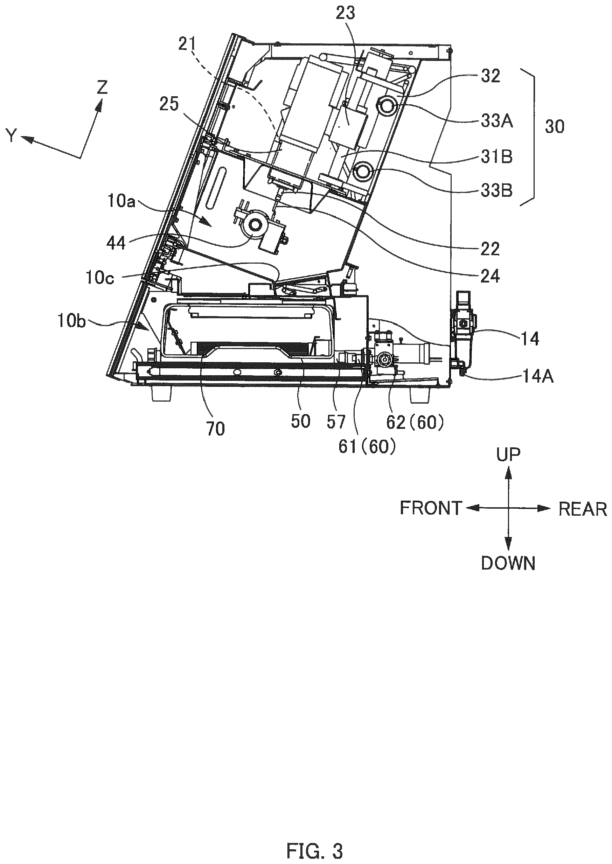

In this embodiment, as shown in Figs. 1 to 3, front, back, left, right, up, and down directions are defmed. In Fig. 3, the side on which the tank 50 is mounted to the feed unit 60 is defined as the forward and the opposite direction is defined as the backward. As shown in Fig. 1, the left and right directions are defined based on the orientation of the housing 10 when seen from the front. The direction in which the machining unit 20 is arranged relative to the holding unit 40 is defmed as upward and the opposite is defined as downward. For the members that can be attached and removed, such as the tank 50, the directions are defined based on their states of being mounted onto or in the housing 10.

### [Housing]

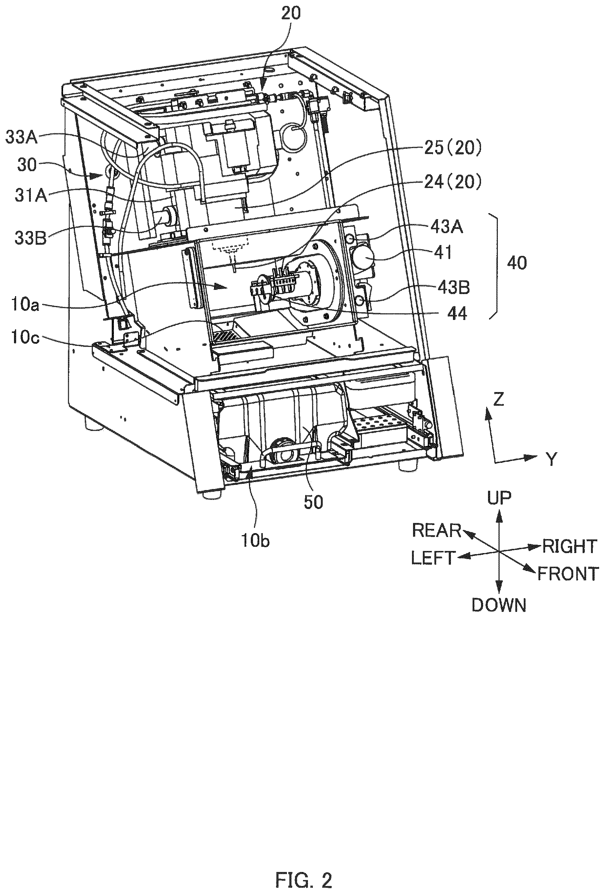

As shown in Fig. 1, the housing 10 includes a main body unit 11 formed to have a substantially rectangular shape, a front cover 12 that can be moved up and down relative to the main body unit 11, a bottom cover 13, and a regulator 14. Inside the main body unit 11, the boundary of a machining space 10a is determined. Furthermore, in the main body unit 11, the boundary of a tank unit compartment 10b in which the tank 50 is contained is determined below the machining space 10a (Fig. 2). An opening 10c for collecting coolant is formed between the machining space 10a and the tank unit compartment 10b.

By moving the front cover 12 upward, the machining space 10a comes to be open to the outside of the housing 10. By pulling the bottom cover 13 forward, the tank unit compartment 10b comes to be open to the outside of the housing 10.

The regulator 14 is installed on the back surface of the housing 10. The regulator 14 has a tube 14A and is in communication with the inside of the housing 10. The regulator 14 has a function of receiving a supply of compressed air from, for example, an external compressor and adjusting the pressure. The compressed air subjected to the pressure adjustment is supplied to the machining unit 20 through the tube 14A and tubing which is not shown.

### [Movement mechanism]

As shown in Figs. 2 and 3, the movement mechanism 30 is placed above the machining space 10a. The movement mechanism 30 includes a pair of shafts 31A and 31B, a base unit 32 that supports the upper and lower ends of the shafts 31A and 31B, and a pair of shafts 33A and 33B that extend in the right-and-left direction. Hereinafter, the direction in which the pair of shafts 31A and 31B extend is defined as the z-direction.

The shafts 31A and 31B support a linkage unit 23 such that it can move in the z-direction. The linkage unit 23 is driven, in the z-direction, by a motor which is not shown. The shafts 33A and 33B support the base unit 32 such that it can move in the right-and-left direction. The base unit 32 is driven, in the right-and-left direction, by a motor which is not shown. With the structure described above, the movement mechanism 30 supports the machining unit 20 and makes the machining unit 20 movable in the z-direction and the right-and-left direction.

### [Holding unit]

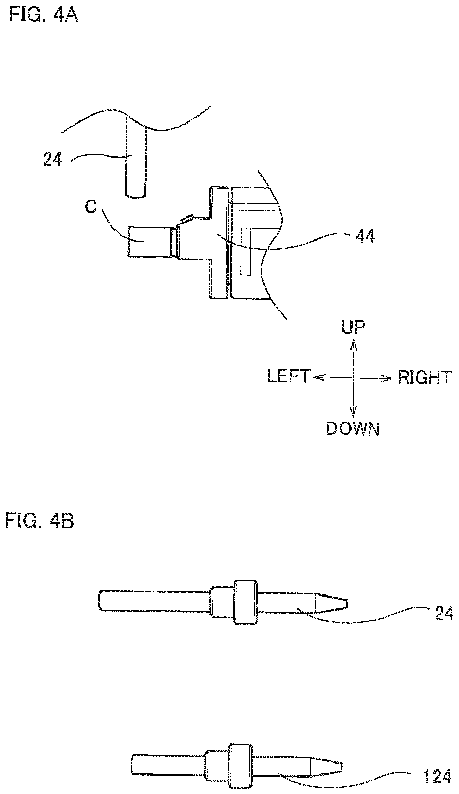

As shown in Figs. 2 and 4, the holding unit 40 includes a drive unit 41, a pair of shafts 43A and 43B that support the drive unit 41, and an attachment unit 44 that is supported by the drive unit 41.

The drive unit 41 is arranged to the right of the machining space 10a. The drive unit 41 has an output shaft extending in the right-and-left direction and can rotation-drive the attachment unit 44 about the output shaft. The attachment unit 44 is arranged inside the machining space 10a. The workpiece C can be attached to and removed from the left end of the attachment unit 44 (Fig. 4).

The shafts 43A and 43B are secured to the housing 10 at their two ends and extend in the y-direction that is perpendicular to the z-direction (Fig. 2). The shafts 43A and 43B support the drive unit 41 such that it can move in the y-direction. In this way, the drive unit 41 and the attachment unit 44 are movable in the y-direction.

### [Tank]

The tank 50 can be mounted in and removed from the housing 10. The tank 50 stores coolant for machining work. As shown in Fig. 3, in the mounted state, the tank 50 is contained in the tank unit compartment 10b. The tank 50 has an intake 57 that projects backward. The intake 57 is formed to have a substantially hollow-cylindrical shape and is in communication with the inside of the tank 50. The intake 57 is, in the mounted state, connected to the feed unit 60 arranged at the back of the housing 10 (see Fig. 3) and can deliver the coolant stored in the tank 50 to the feed unit 60. Furthermore, as shown in Fig. 3, the filter 70 is disposed in the tank 50. The filter 70 has a filter material formed to have a hollow-cylindrical shape and can remove foreign matter contained in the coolant.

### [Feed unit]

The feed unit 60 includes a connection unit 61 and a pump unit 62, as shown in Fig. 3. The connection unit 61 is disposed in the tank unit compartment 10b and is connected to the intake 57 when the tank 50 is mounted. A channel that is in communication with the pump unit 62 is formed inside the connection unit 61.

The pump unit 62 is disposed behind the tank unit compartment 10b. The pump unit 62 has a function of taking the coolant from the connection unit 61 and discharging and delivering the coolant to the machining unit 20 through a channel which is not shown.

### [Machining unit]

As shown in Figs. 2 to 6, the machining unit 20 includes a motor 21, a spindle 22 that extends in the z-direction, the linkage unit 23, milling bars 24 and 124 (Fig. 4) which are tip tools to cut the workpiece C, and a jacket 25. The linkage unit 23 is a member that links the motor 21 and the movement mechanism 30 (Fig. 3). The rear part of the linkage unit 23 is supported by the movement mechanism 30.

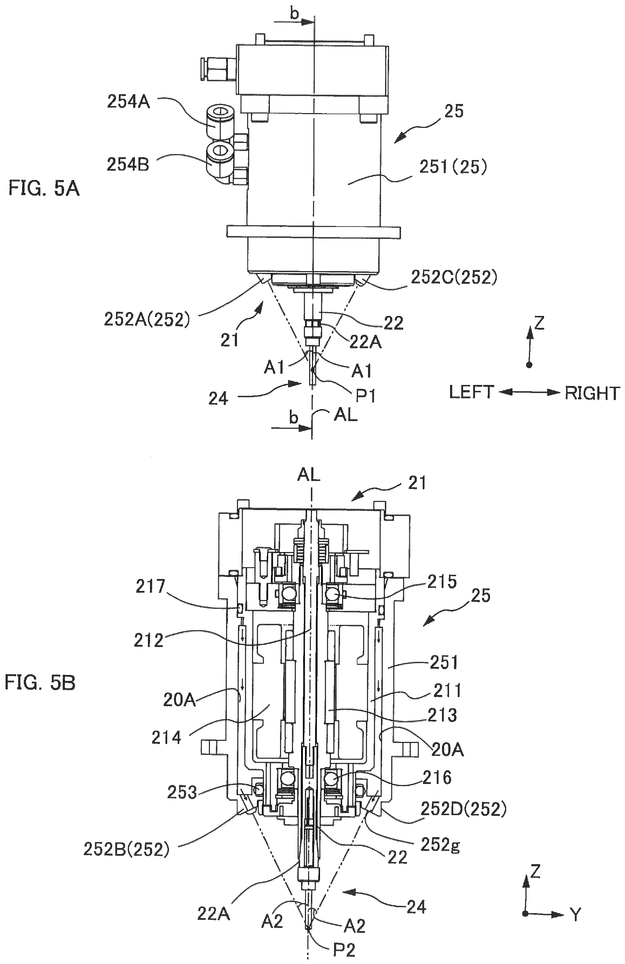

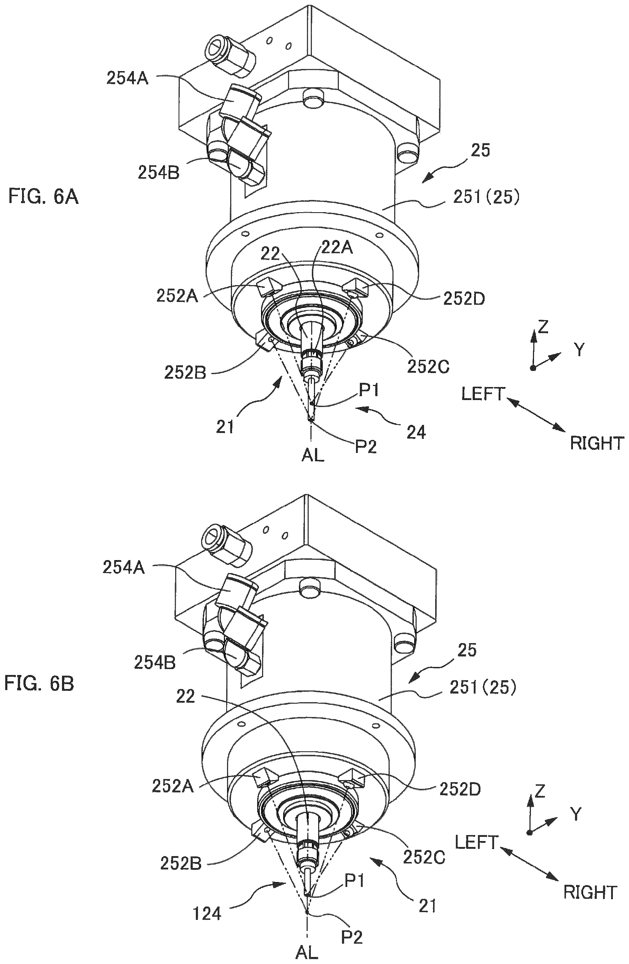

The motor 21 is a brushless motor and includes a casing 211, an output shaft 212, a rotor 213, and a stator 214 (Figs. 5 and 6). The motor 21 has a function of rotation-driving the spindle 22. The motor 21 is electrically connected to a control unit which is not shown and is controlled. The casing 211 is an example of the first housing in the present invention.

As shown in Figs. 5 and 6, the casing 211 is a member having a substantially hollow-cylindrical shape which extends in the z-direction and serves as the outer shell of the motor 21. Bearings 215 and 216 are disposed at upper and lower parts of the casing 211, respectively. A circular ring-shaped packing 217 is attached to the upper circumferential surface of the casing 211. The packing 217 is made of an elastic body such as elastomer.

The output shaft 212 is arranged in the casing 211. The output shaft 212 has a substantially solid-cylindrical shape and defines a shaft axis AL that is parallel to the z-axis (Figs. 5 and 6). The upper and lower ends of the output shaft 212 are supported by the bearings 215 and 216, respectively, such that they can rotate about the shaft axis AL. That is, the output shaft 212 is rotatably supported by the casing 211 via the bearings 215 and 216. A permanent magnet is secured to the output shaft 212 such that it surrounds the output shaft 212 at its central part in the direction of the shaft axis AL of the output shaft 212 and forms the rotor 213 having a solid-cylindrical shape. The lower end of the output shaft 212 is coaxially coupled to the spindle 22. The output shaft 212 and the spindle 22 are examples of the drive shaft of the present invention.

The stator 214 includes stator cores and windings around each stator core. The stator 214 is disposed such that it surrounds the rotor 213 in the peripheral direction and is secured to the inner peripheral surface of the casing 211. The stator 214 is electrically connected to a control unit which is not shown and can rotation-drive the rotor 213 when supplied with electric power.

The spindle 22 is a member having a substantially solid-cylindrical shape and is exposed to the machining space 10a (Fig. 3). The upper end of the spindle 22 is coupled to the output shaft 212 and the spindle 22 can coaxially rotate about the shaft axis AL. A collet 22A is disposed at the lower end of the spindle 22 and holds one of the milling bars 24 and 124 (Fig. 4B) for cutting in a removable manner. That is, each of the milling bars 24 and 124 for cutting can be attached to and removed from the output shaft 212 via the spindle 22. The spindle 22 can receive both of the two kinds of the milling bars 24 and 124 shown in Fig. 4B. The milling bars 24 and 124 have different lengths. The milling bar 24 is a long tip tool and the milling bar 124 is a short tip tool. During work, it is appropriately determined which one of the milling bars 24 and 124 is attached to the spindle 22 depending on the shape of the workpiece C, the purpose of machining and so on.

The jacket 25 has a main body unit 251 and water supply units 254A and 254B (Figs. 5 and 6). The main body unit 251 is a member having a substantially hollow-cylindrical shape with an axis extending in the z-direction. The jacket 25 is an example of the second housing in the present invention.

The main body unit 251 is made of stainless steel and is secured such that it covers the casing 211 (Fig. 6). The main body unit 251 may be made of a resin. The main body unit 251 has, at least at a part thereof, an inner diameter that is larger than an outer diameter of the casing 211 and is disposed and secured coaxially from below the casing 211 like a cover. As shown in Fig. 5B, a channel 20A is formed between the main body unit 251 and the casing 211 through which coolant flows from the upper end to the lower end. The channel 20A is formed to have a substantially circular ring shape when seen in the z-direction. The channel 20A is located near the bearing 216 and the stator 214. Specifically, as shown in Fig. 5B, the channel 20A is located radially outward of the bearing 216 and the stator 214.

As shown in Fig. 5B, the upper end of the main body unit 251 is in contact with the outer periphery of the casing 211. The inner periphery of the upper end of the main body unit 251 is in contact with a packing 217 all around it. The lower end of the main body unit 251 has a packing 253. The packing 253 is made of an elastic body such as elastomer that is formed to have a circular ring shape. It is in contact with the lower end of the casing 211 all around it. The contacted parts of the casing 211 and the main body unit 251 is water-tight by the packings 217 and 253. In other words, the main body unit 251 is water-tightly in contact with the casing 211 at its upper and lower parts.

The water supply units 254A and 254B are disposed on the upper part of the main body unit 251. The water supply units 254A and 254B are formed as hollow tubes and are in communication with the channel 20A. The water supply units 254A and 254B are in communication with the feed unit 60 through a channel which is not shown and can receive a supply of the coolant.

Four coolant nozzles 252 that are integrally formed with the main body unit 251 are disposed on the lower surface of the main body unit 251 (Fig. 6). The four coolant nozzles 252 are arranged at an angle of 90 degrees to each other in the circumferential direction around the spindle 22 and located at a substantially equal distance from the spindle 22. For the purpose of facilitating the understanding, when the coolant nozzles 252 are described individually, each of the coolant nozzles 252 are denoted by reference symbols 252A, 252B, 252C, and 252D, as viewed from the bottom starting from the left and going counterclockwise, as shown in Figs. 5 and 6.

Each coolant nozzle 252 is projected downward from the lower surface of the main body unit 251. A channel 252g that connects the channel 20A and the outside of the jacket 25 in communication with each other is formed in each coolant nozzle 252. Each coolant nozzle 252 has a function of shooting the coolant toward the workpiece C or one of the milling bars 24 and 124 that has been attached to the spindle 22 through the channel 252g.

The coolant nozzles 252 according to this embodiment are configured to shoot the coolant toward multiple sites on the shaft axis of the drive shaft. Specifically, an angle for shooting the coolant relative to the shaft axis AL is defined as an angle A1 for each of the coolant nozzles 252A and 252C (Fig. 5A). An angle for shooting the coolant relative to the shaft axis AL is defined as an angle A2 that is different from the angle A1 for each of the coolant nozzles 252B and 252D (Fig. 5B). The angle A2 is smaller than the angle A1.

As shown in Figs. 5 and 6, the course of the coolant shot from each of the four coolant nozzles 252 is depicted by a long-dashed double-dotted line. As described above, since the angle for shooting the coolant from the coolant nozzles 252A and 252C is different from that of the coolant nozzles 252B and 252D, the sites (target points) where the coolant hits differ. As shown in Figs. 5 and 6, the angle for shooting from each of the coolant nozzles 252A and 252C is defined such that the coolant hits a target point P1 on the shaft axis A1. The angle for shooting from each of the coolant nozzles 252B and 252D is defined such that the coolant hits a target point P2 on the shaft axis A1. The target point P2 substantially completely overlaps with the tip of the long milling bar 24 attached to the spindle (Fig. 6A), and the target point P1 substantially completely overlaps with the tip of the short milling bar 124 attached to the spindle (Fig. 6B). That is, in this embodiment, the angle A1 or the angle A2 is defined such that the coolant is shot toward the tip of the milling bar 24 or 124.

Such difference in angle for shooting is attributed to the slope of the channel 252g. In other words, the difference is produced by individually defining the nozzle angles relative to the shaft axis AL. Specifically, the nozzle angle for the coolant nozzles 252A and 252C is defined as the angle A1 relative to the shaft axis AL. The nozzle angle for the coolant nozzles 252B and 252D is defined as the angle A2 relative to the shaft axis AL.

In this example, the coolant nozzles 252A and 252C are examples of the "first nozzle," the angle A1 is an example of the "first angle," the coolant nozzles 252B and 252D are examples of the "second nozzle," the angle A2 is an example of the "second angle," the target point P1 is an example of the "first site," and the target point P2 is an example of the "second site."

### [Operation of the machining device]

Now, machining work with the machining device 1 and operations are described. Before starting machining work, a user puts a coolant into the tank 50 to which the filter 70 has been attached and installs it to the tank unit compartment 10b. Upon installation, the intake 57 and the connection unit 61 are connected and the mounting of the tank 50 to the housing 10 is completed.

When the workpiece C is attached to the attachment unit 44 and the machining work is started, the milling bar 24 or 124, the output shaft 212, and the spindle 22 rotate and machine the workpiece C. In the machining work, the tip of the milling bar 24 or 124 comes in contact with the workpiece C to perform cutting and machining. With the movement mechanism 30, the attachment unit 44, and the drive unit 41, the milling bars 24 and 124, and the workpiece C can move relative to each other in three-dimensional directions. Therefore, the machining device 1 can three-dimensionally cut the workpiece C.

During the machining work, the coolant stored in the tank 50 is filtered through the filter 70, passes the intake 57 and then the connection unit 61, and is supplied to the pump unit 62.

The coolant is supplied to the machining unit 20 by the pump unit 62. Specifically, the coolant flows from the water supply units 254A and 254B through the channel 20A in the substantially z-direction as depicted by the arrows in Fig. 5B and is shot from the coolant nozzles 252.

The coolant nozzles 252 shoot the coolant toward the contacted points between the workpiece C and one of the milling bars 24 and 124, i.e., the machined sites. In this way, the coolant nozzles 252 cool the milling bar 24 (Fig. 6A) or the milling barl24 (Fig. 6B) and the workpiece C, at and near the machined site. The coolant that has been shot from the coolant nozzles 252 lubricates the milling bar 24 or 124 and the workpiece C to reduce the friction at the machined site. The coolant cools the workpiece C and the milling bars 24 and 124 and improves smoothness, thereby preventing damages of the machined site, galling, degradation of the milling bars 24 and 124, and so on. The coolant after being served to the cooling and lubrication is collected through the opening 10c and then stored in the tank 50 again.

Since the coolant is shot toward the two target points P1 and P2, the machining device 1 can achieve cooling and improve smoothness by hitting the coolant against the machined site regardless of which one of the long milling bar 24 and the short milling bar 124 is attached. That is, regardless of the type of the tip tools, the tip tool and the workpiece C are suitably cooled and lubricated at and near the machined site. Furthermore, since the coolant is shot toward multiple sites, the machining device 1 can cool the milling bar 24 or 124 and the workpiece C at and near the machined site at the same time and improve smoothness. Therefore, with this structure, the tip tool and the workpiece C can be efficiently cooled.

### <Effects>

As described above, the machining device 1 according to this embodiment includes the output shaft 212 to which the milling bars 24 and 124 which are capable of machining the workpiece C can be attached, and the coolant nozzles 252 which shoot the coolant toward a plurality of sites on the shaft axis AL of the output shaft 212.

With the above-mentioned structure, by shooting the coolant toward a plurality of sites on the shaft axis AL, the milling bars 24 and 124 and the workpiece C can be cooled with improving smoothness at and near the machined site regardless of the type of the milling bars 24 and 124.

The coolant nozzles 252 according to this embodiment have the coolant nozzles 252A and 252C for which an angle for shooting the coolant relative to the shaft axis AL is defined as the angle A1. In addition, the coolant nozzles 252 have the coolant nozzles 252B and 252D for which an angle for shooting the coolant relative to the shaft axis AL is defined as the angle A2 that is different from the angle A1.

With the above-mentioned structure, the target points at which the coolant is shot can be changed by the angle for shooting for the coolant nozzles 252. Therefore, it is possible to achieve the function of shooting the coolant toward a plurality of sites using a simple structure.

The angle A1 or the angle A2 in this embodiment are defined such that the coolant is shot toward the tip of the milling bar 24 or the milling bar 124.

With the above-mentioned structure, since the coolant is shot to the tips of the milling bars 24 and 124, it is possible to cool the machined site without fail or improve smoothness.

The machining device 1 according to this embodiment includes the motor 21 having the casing 211 supporting the output shaft 212. Furthermore, the machining device 1 includes the jacket 25 disposed to cover at least a part of the casing 211. The channel 20A is formed between the casing 211 and the jacket 25.

With the above-mentioned structure, the channel 20A can be constituted using a simple structure. Accordingly, the cost of manufacturing the machining device 1 can be reduced, and a smaller machining device 1 can be obtained.

The coolant nozzles 252 include two coolant nozzles 252A and 252C that shoot the coolant toward the target point P1 on the shaft axis AL. In addition, the coolant nozzles 252 include two coolant nozzles 252B and 252D that shoot the coolant toward the target point P2 which is different from the target point P1.

With the above-mentioned structure, two coolant nozzles 252 shoot the coolant to one target point, which makes the cooling or lubrication of the machined site in a more certain way.

### <Modified version>

In this embodiment, the machining device 1 sets a plurality of target points at which the coolant is shot for each of the coolant nozzles 252. The present invention is, however, not limited to such structure and modifications as described below can be included.

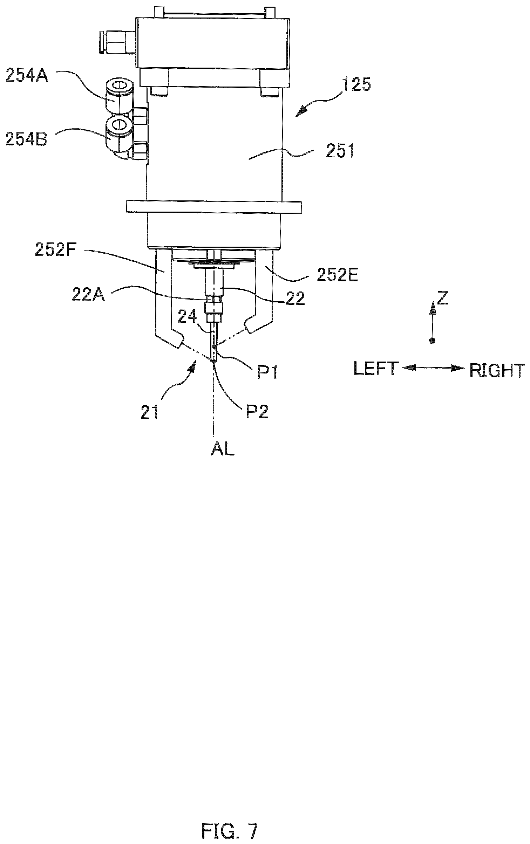

Fig. 7 shows a jacket 125 and a motor 21 according to a modification of the present invention. The motor 21 is identical in structure to the one described in the embodiment mentioned above. The jacket 125 includes a main body unit 251 which is substantially identical in structure to the one described in the embodiment mentioned above, and two coolant nozzles 252E and 252F that are opposed to each other with the spindle 22 located between them. Each of the coolant nozzles 252E and 252F is formed to have a hollow tubular shape and is in communication with the channel 20A. The coolant nozzles 252E and 252F extend from the main body unit 251 along the z-direction and the lengths of their projection differ from each other. The lower part of the coolant nozzles 252E and 252F are bent toward the shaft axis AL. The angles of bending the coolant nozzles 252E and 252F are substantially equal to each other relative to the shaft axis AL. Therefore, the angles for shooting the coolant from the coolant nozzles 252E and 252F are substantially equal to each other relative to the shaft axis AL. The tips of the coolant nozzles 252E and 252F are located near the target points P1 and P2, respectively. The relative position between the spindle 22 and each of the target points P1 and P2 is identical to the one described in the embodiment mentioned above.

As shown in Fig. 7 by a long-dashed double-dotted line, the coolant nozzle 252E shoots the coolant toward the target point P1. The coolant nozzle 252F shoots the coolant toward the target point P2.

As described above, the present invention achieves a configuration in which a plurality of shooting target points are set by changing the length of the coolant nozzles 252 while setting a substantially equal angle for shooting the coolant.

In the modification, since the coolant is shot toward the two target points P1 and P2, the machining device 1 can achieve cooling and improve smoothness by hitting the coolant against the machined site regardless of which one of the long milling bar 24 and the short milling bar 124 is attached. Furthermore, the milling bars 24 and 124 and the workpiece C are cooled at the same time at the machined site and a plurality of sites near it and smoothness is improved.

The number of coolant nozzles 252 in the embodiment is not limited to four. As described in the modification, the number may be two or any other number may be used such as three or five. Three or more different angles for shooting the coolant may be used in consideration of the variations in type of the tip tools, i.e., the length, thickness, and shape, instead of using two different angles for shooting. That is, three or more shooting target points may be used. For example, in the embodiment, different angles for shooting may be used for four coolant nozzles 252. In this case, the tip tools can be cooled precisely, or smoothness is improved even when three more different tip tools are used.

The above embodiment is provided as an example of the invention and does not limit the scope of the invention. Various omissions, substitutions, and changes can be made to the above configuration without departing from the subject matter of the invention. The above embodiment and modifications thereof are included in the scope and spirit of the invention as well as within the invention recited in the claims and equivalents thereof.

## Claims

1. A machining device comprising:
a drive shaft to which a tip tool can be attached, the tip tool being capable of machining a workpiece; and
a plurality of nozzles shooting a coolant toward a plurality of portions on a shaft axis of the drive shaft.

2. The machining device according to Claim 1, wherein
the plurality of nozzles comprise at least a first nozzle for which an angle for shooting the coolant toward the shaft axis is defined as a first angle, and a second nozzle for which the angle for shooting is defined as a second angle that is different from the first angle.

3. The machining device according to Claim 2, wherein
the first angle or the second angle is defined such that the coolant is shot toward a tip of the tip tool.

4. The machining device according to any one of Claims 1 to 3, comprising:
a motor having a first housing supporting the drive shaft, the motor configured to drive the drive shaft; and
a second housing having the plurality of nozzles, the second housing being provided to cover at least a part of the first housing.

5. The machining device according to any one of Claims 1 to 4, wherein
the plurality of nozzles comprise:
two nozzles shooting the coolant toward a first portion on the shaft axis; and
two nozzles shooting the coolant toward a second portion on the shaft axis, the first portion being different from the second portion.
